# EUROPEAN PATENT APPLICATION

(11) **EP 2 918 405 A1**
(43) Date of publication of application: **16.09.2015**
(21) Application number: 14158886.3
(22) Date of filing: 11.03.2014
(51) Int. Cl.: B29D 99/00, B29C 33/68, B29C 33/58, B29C 70/30, B29L 31/08

(54) **A method for manufacturing a component for a wind turbine**

(71) Applicant: Siemens Aktiengesellschaft, 80333 München (DE)
(72) Inventor: Bernhard, Benly, 9200 Aalborg (DK); Tangager, Kim, 9560 Hadsund (DK)

(57) **Abstract**

A method for manufacturing a component (5) for a wind turbine is provided.

The method comprises: a) covering a mold surface (9) with a peel-off layer (10), b) providing a layup (13) of fiber material on top of the peel-off layer (10), c) curing a resin impregnating the fiber material to form the component (5), and d) peeling the peel-off layer (10) off the component (5).

The method is advantageous in that it avoids sanding or sandblasting of a cured blade to remove a release agent adhering to the blade surface.

## Description

The present invention relates to a method for manufacturing a component for a wind turbine, in particular a rotor blade.

Modern wind turbine rotor blades are built from fiber-reinforced composites combined with core members, such as balsa wood or plastic foam.

For example, EP 2 123 431 A1 describes a method for manufacturing a rotor blade using a vacuum-assisted resin transfer molding (VARTM)-process. In a first step of the manufacturing process, fiber material is laid onto a lower part and an upper part of a mold, respectively. The fiber material is secured in place by vacuum applied from beneath. Then, mold cores are covered in vacuum bags and are placed in the lower part of the mold together with a web (also known as a shear web). Next, the upper part of the mold, together with the fiber material, is turned 180° about its longitudinal axis and put into place so that the mold is closed. In a further step, vacuum is applied to the space between the vacuum bags and the mold. Then, resin is injected. When the resin has set, the mold is opened and the cured blade is removed from the mold.

Typically, before laying the fiber material onto the lower and the upper part of the mold, respective mold surfaces are covered with a release agent. The release agent allows the cured blade to be removed from the mold. Yet, typically some of the release agent sticks to the cured rotor blade surface. Therefore, the cured rotor blade needs to be sanded or sandblasted to remove any remaining release agent. Otherwise, a filler material to fill up or repair smaller surface imperfections of the rotor blade after curing as well as paint will not stick to the rotor blade surface due to their low adhesion to the release agent.

One objective of the present invention is to provide an improved method for manufacturing a component for a wind turbine.

Accordingly, a method for manufacturing a component for a wind turbine, in particular a rotor blade, is provided. The method comprises: a) covering a mold surface with a peel-off layer, b) providing a layup of fiber material on top of the peel-off layer, c) curing a resin impregnating the fiber material to form the component, and d) peeling the peel-off layer of the component.

The method is advantageous in that the peel-off layer protects or keeps a release agent away from the surface of the component. Or, the peel-off layer may even be used instead of any release agent. In this case, the peel-off layer itself acts as the release agent.

Thus, in the method of the present invention, no release agent sticks to the rotor blade after curing of the rotor blade and removing the peel-off layer. Thus, no more sandblasting or sanding of the rotor blade is required. This is not only cost-effective, but also improves the quality of the rotor blade surface, since sandblasting or sanding typically produces a great number of pinholes in the rotor blade surface. Even further, the release agent is known to have a negative effect on resin flow during the infiltration of the fiber material with the resin. This is also avoided by using the peel-off layer herein described.

Preferably, the peel-off layer of step d) is or resembles a plastic foil. "Peeling off" is to say that the material within the peel-off layer forms stronger bonds within the layer than the bonds formed between the layer and the surface of the rotor blade. Thus, the peel-off layer can be peeled off in one piece or in a number of larger pieces.

The fiber material used for the layup in step b) may comprise fiber material of different shapes and composition. For example, the fiber material may comprise a layup of fibers, rovings, a fiber mat, a fiber fabric, woven fibers or a fiber felt. The fibers may be arranged unidirectionally, in a biax configuration or in another configuration. The fibers may comprise glass fibers, carbon fibers and/or aramid fibers, for example. The fiber material may be supplied in a pre-impregnated state (so-called prepreg material) or in an unimpregnated state. In the latter case, the fiber material is impregnated with a resin before step c). For example, the resin may be injected into the fiber material in a resin transfer molding (RTM) or vacuum-assisted resin transfer molding (VARTM)-process. In a VARTM-process, for example, the layup comprising the fiber material is covered in a vacuum bag. In a further step, vacuum is applied to the region between the vacuum bag and the mold. Then, resin is injected into said region. After the resin has set or has been cured - typically by the addition of external heat -, the vacuum bag and/or the mold is removed and the final rotor blade is obtained. Of course, when using a prepreg material, there is no need to inject the fiber material with resin.

Generally speaking, the mold may be an open or a closed mold. For example, the mold may comprise one or more parts, in particular a lower part and an upper part.

"Uncured" herein refers to the resin not being hardened and/or cross-linked at all or not to a substantial extent. "Cured" or "set" refers to the resin being hardened and/or cross-linked to an extent where a shape of the layup will not or not significantly change any more.

Examples of a resin which may be useful impregnating the fiber material are epoxy, polyester, vinylester or any other suitable thermoplastic or duroplastic material.

In step b), "on top of" also comprises "next to" or "adjacent" in cases where the fiber material is not arranged horizontally. The layup fiber material may be provided directly on top of the peel-off layer. In other embodiments, some other material, for example a vacuum distribution layer, a layer of balsa wood or a layer of foam may be arranged between the layup of fiber material and the peel-off layer. By the same token, the peel-off layer does not need to be arranged directly on the mold surface. For example, a release agent may be provided between the peel-off layer and the mold surface.

A "layup" is defined herein as one or more layers of fiber material.

"a)", "b)", "c)" and "d)" are not to imply a fixed order of the method steps. Rather, the steps a) to d) may be carried out in different order as appropriate in the mind of the skilled person.

According to an embodiment, in step a), the peel-off layer is applied to the mold surface in a liquid form.

For example, the peel-off layer may comprise a polymer system with two or more components. The two components, typically liquids or pastes, are mixed and applied to the mold surface. The peel-off layer in a liquid form may be spread or distributed easily over the mold surface. Further, a liquid peel-off layer can be easily stored on site, i.e. at the mold, for example in a tank. In other embodiments, the peel-off layer provided in step a) is already of a solid form. For example, the mold surface may be covered with a plastic peel-off foil or similar foil in step a).

According to a further embodiment, the peel-off layer changes from its liquid form into a solid form by the addition of external heat.

Thus, the peel-off layer is applied in liquid form in step a), gets heated at some point before step d) in order to become solid and form a peelable peel-off layer, and in step d) the solid peel-off layer or foil is being peeled off the component.

According to a further embodiment, external heat is added to cure the resin impregnating the fiber material in step c), said external heat also changing the peel-off layer from its liquid to its solid form.

In other words, the peel-off layer is heated in the same step as the resin. In particular, the same source of external heat, for example electric heating elements, may be used to heat the peel-off layer as well as the resin.

The process of a peel-off layer changing from its liquid to its solid form may also be described as "curing" or "setting". In particular, the change from the liquid to the solid form may comprise cross-linking of molecular chains in the peel-off layer material. Alternatively or in addition, a volatile component in the peel-off layer material may evaporate to produce the solid form.

According to a further embodiment, the peel-off layer is sprayed onto the mold surface.

To this end, a spray gun may be used. This process is fast and ensures an even distribution of the peel-off layer across the mold surface. Alternatively, the liquid peel-off layer may be applied by a roller (similar to a paint roller).

According to a further embodiment, the peel-off layer comprises a polymer.

According to a further embodiment, the polymer is a vinyl acetate-vinyl alcohol polymer.

In addition, the peel-off layer, at least the peel-off layer of step a), may comprise water, glycerine and/or ethyl alcohol in addition to the polymer. For example, the liquid peel-off layer of step a) may comprise by weight-percent: 70 - 90% water, 10 - 30% vinyl acetate-vinyl alcohol polymer, 1 - 5% glycerine and/or 0.1 - 1% ethyl alcohol. A liquid peel-off layer of this kind is, for example, made by the company 3M (booth coating, PN 6839 PN 6840).

According to a further embodiment, a release agent is applied to the mold surface, and the peel-off layer is applied to the mold surface covered with the release agent in step a).

This embodiment is particularly useful, when the peel-off layer does not itself act as a release agent, or not to a sufficient extent. As already noted, however, the peel-off layer may in other embodiments fully replace the release agent.

According to a further embodiment, the peel-off layer has reflective properties different from the mold surface.

This will allow an operator, in particular a human operator, to easily spot areas of the mold surface which have not been covered with the peel-off layer in step a). Or, the different reflective properties may help the operator to spot pieces of the pull-off layer still sticking to the mold surface after the rotor blade has been removed from the mold. The different reflective properties may, for example, result in the peel-off layer and the mold surface having different colors.

According to a further embodiment, the peel-off layer has reflective properties different from a surface of the formed component.

Thus, the operator will easily spot pieces of the peel-off layer still being attached or sticking to the component in step d). This will ensure that the entire peel-off layer is removed by the operator.

According to a further embodiment, the peel-off layer is transparent.

Thus, the operator will be able to spot faults in the surface of the component. For example, the operator will be able to spot fiber material which has not been fully impregnated by resin.

Even though reference is being made to the rotor blade in at least some of the embodiments explained herein, the embodiments and the features explained equally apply to any other component for a wind turbine.

"Wind turbine" presently refers to an apparatus converting the wind's kinetic energy to rotational energy, which may again be converted to electrical energy by the apparatus.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further objects, features and advantages of the present invention become apparent from subsequent description and depending claims, taken in conjunction with the accompanying drawings in which
- Fig. 1: is a perspective view of a wind turbine according to an embodiment;
- Fig. 2: is a partial section view from a process in accordance with an embodiment of a method for manufacturing a rotor blade for the wind turbine of Fig. 1;
- Fig. 3: shows a sectional view from a VARTM-process according to an embodiment of the method for manufacturing the rotor blade; and
- Fig. 4: shows a flowchart in accordance with an embodiment of a method for manufacturing the rotor blade.

In the Figures, like reference numerals designate like or functionally equivalent elements, unless otherwise indicated.

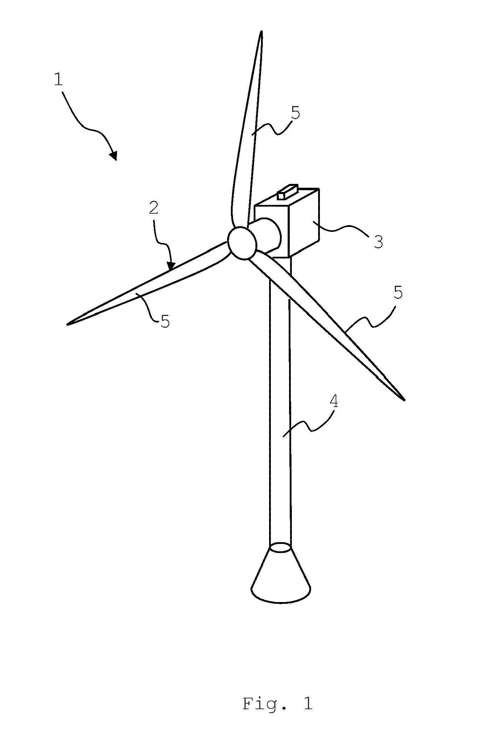

Fig. 1 shows a wind turbine 1 according to an embodiment.

The wind turbine 1 comprises a rotor 2 connected to a generator (not shown) arranged inside a nacelle 3. The nacelle 3 is arranged at the upper end of a tower 4 of the wind turbine 1.

The rotor 2 comprises three blades 5. Rotors 2 of this kind may have a diameter ranging from, for example, 30 to 160 meters. The blades 5 are subjected to high wind loads. At the same time, the blades 5 need to be lightweight. For these reasons, blades 5 in modern wind turbines 1 are manufactured from fiber-reinforced composite materials. Therein, glass fibers are generally preferred over carbon fibers for cost reasons. In addition, the blades 5 may each comprise one or more core members made of a lightweight material to reduce the weight of the blades 5. For example, the core members may be manufactured from balsa wood or plastic foam. Hereinafter, a process is described for manufacturing a rotor blade 5. Yet, this process may also be employed to manufacture any other component for a wind turbine.

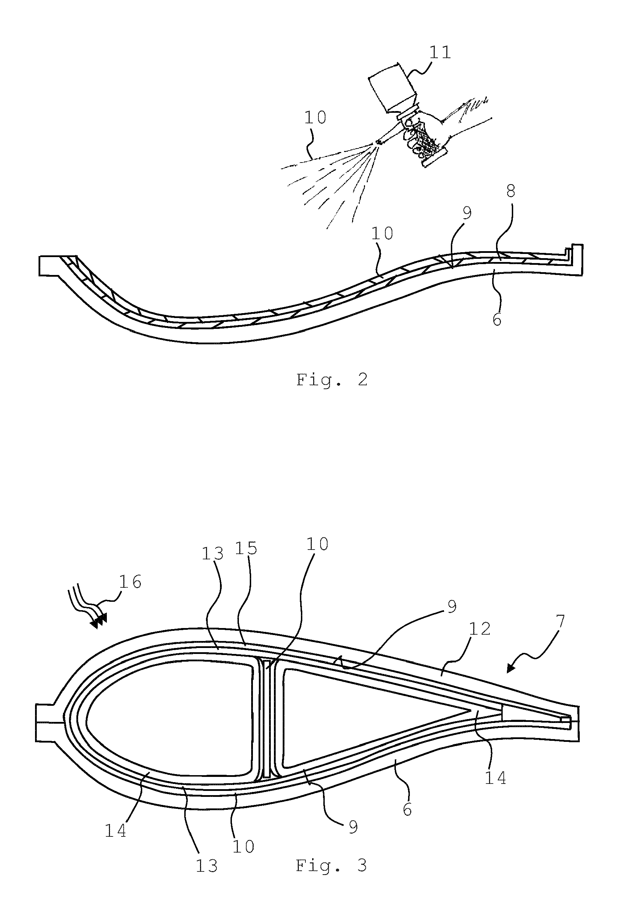

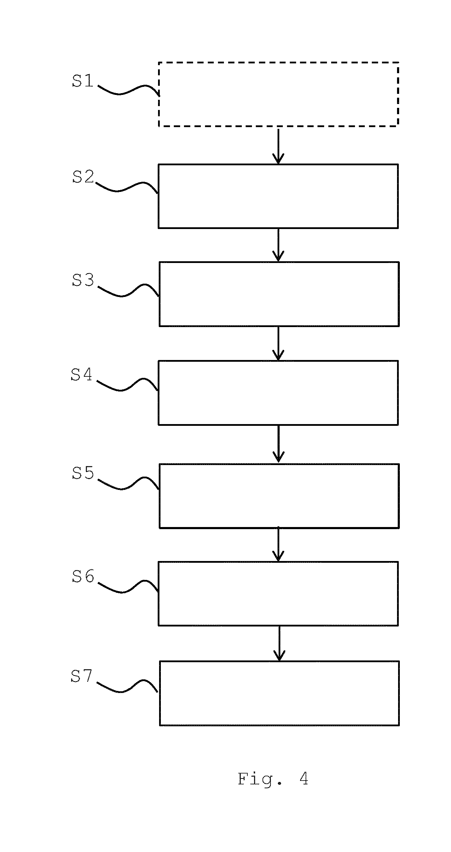

Fig. 2 shows a section view through a lower half 6 of a mold 7 (Fig. 3) early in the process. Reference is also made to Fig. 4 hereinafter, which shows a flowchart.

In a first step S1, a release agent 8 is applied to a surface 9 of the lower half 6 of the mold 7. Release agents 8 of different composition are known.

In a step S2, a peel-off layer material 10 in liquid form is applied to the release agent 8. The peel-off layer 10 may be applied using a spray gun 11. For example, a polymer system comprising two components which are mixed together shortly before the spraying process is used.

The peel-off layer material 10 may have the following composition by weight-percent: 70 - 90% water, 10 - 30% vinyl acetate-vinyl alcohol polymer, 1 - 5% glycerin and 0.1 - 1.0% ethyl alcohol. This material may, for example, be sourced from 3M under the name "booth coating PN 6839 PN 6840".

According to another embodiment of the method, no release agent 8 is used. Thus, step S1 is not required. In this case, the peel-off layer material 10 is applied directly to the surface 9 of the lower half 6 of the mold 7. The peel-off layer 10 serves as a release agent itself allowing the cured blade to be removed from the mold 7. Thus, any type of release agent, be it the release agent 8 or the peel-off layer 10, prevents sticking of the blade or the resin to the surface 9 of the lower half 6 of the mold 7.

Fig. 3 now shows a section view from a VARTM-process following the steps described with reference to Fig. 2.

In the beginning, an upper half 12 of the mold 7 is positioned next to the lower half 6 and turned by 180° compared to Fig. 3. In step S3, a layup 13 of fiber material, for example fiber mats, is created on the lower and upper half 6, 12 respectively. Then, a vacuum is applied underneath a respective layup 13. To this end, a suction pump (not shown) may create a vacuum between an outermost layer of the layup 13 and a respective surface 9. The layup 13 comprises dry fibers. According to another embodiment, pre-impregnated fibers may be used.

In a step S4, mold cores 14 are covered in vacuum bags (not shown) and are placed in the lower half 6 on top of the layup 13 together with a web 15.

In a step S5, a vacuum is applied to the space between the vacuum bags and the surfaces 9. Also in step S5, resin, for example an epoxy, is injected into said space.

In a step S6, external heat 16 is applied to the resin inside the mold 6. To this end, electrical heating elements may be used.

In that same step S6, the liquid peel-off layer 10 is turned into a solid plastic foil by the added heat through polymerization. In other words, the peel-off layer 10 is cured.

Once the resin has also cured, the mold cores 14 are removed from the mold 7. Then, the upper half 12 of the mold 7 is taken off the lower half 6 of the mold 7. Now, the cured blade 5 is taken out of the lower part 6. At this point, the cured peel-off layer 10 may still be sticking to the outer surface of the blade 5. Yet, some of the peel-off layer 10 may also be sticking to either the lower half 6 or the upper half 12 of the mold 7. In any case, any remaining peel-off layer on the blade 5 is now peeled off (step S7 in Fig. 4).

Preferably, the cured peel-off layer 10 has a color different from the color of the surfaces 9 of the lower and upper halves 6, 12 of the mold 7. Thus, an operator may easily spot pieces of the cured peel-off layer 10 sticking to the surfaces 9 and remove them.

Also, it is preferred if the color of the peel-off layer 10 is different from the color of the surface of the rotor blade 5. Again, this will help the operator spot pieces of the peel-off layer 10 that have not been peeled off the blade 5 yet.

It may also be desirable to choose a peel-off layer 10 which is transparent. This would allow an operator to spot areas in the surface of the blade 5 underneath the cured peel-off layer 10 where the fiber material has not been fully impregnated by resin.

Hence, a blade 5 is obtained a process in which the blade 5 does not come into contact with a release agent 8. Hence, no sanding or sandblasting of the surface of the blade 5 is required. This is cost-effective, and a high-quality surface of the blade 5 is obtained.

Although the present invention has been described in accordance with preferred embodiments, it is obvious for a person skilled in the art that modifications are possible in all embodiments.

## Claims

1. A method for manufacturing a component (5) for a wind turbine (1), in particular a rotor blade (5), comprising the steps of:
a) covering (S2) a mold surface (9) with a peel-off layer (10),
b) providing (S3) a layup (13) of fiber material on top of the peel-off layer (10),
c) curing (S6) a resin impregnating the fiber material to form the component (5), and
d) peeling (S7) the peel-off layer (10) off the component (5).

2. The method of claim 1, wherein in step a) the peel-off layer (10) is applied to the mold surface (9) in a liquid form.

3. The method of claim 2, wherein the peel-off layer (10) changes from its liquid form into solid form by the addition of external heat (16).

4. The method of claim 3, wherein external heat (16) is added to cure the resin impregnating the fiber material of the layup (13) in step c), said external heat (16) also changing the peel-off layer (10) from its liquid to its solid form.

5. The method of one of claims 2 to 4, wherein the peel-off layer (10) is sprayed onto the mold surface (9).

6. The method of one of claims 1 to 5, wherein the peel-off layer (10) comprises a polymer.

7. The method of claim 6, wherein the polymer is a vinyl acetate-vinyl alcohol polymer.

8. The method of one of claims 1 to 7, wherein a release agent (8) is applied (S1) to the mold surface (9), and the peel-off layer (10) is applied to the mold surface (9) covered with the release agent (8) in step a).

9. The method of one of claims 1 to 8, wherein the peel-off layer (10) has reflective properties different from the mold surface (9).

10. The method of one of claims 1 to 9, wherein the peel-off layer (10) has reflective properties different from a surface of the formed component (5).

11. The method of one of claims 1 to 10, wherein the peel-off layer (10) is transparent.
